# EUROPEAN PATENT SPECIFICATION

(11) **EP 0 384 172 B1**
(45) Date of publication and mention of the grant of the patent: **12.10.1994**
(21) Application number: 90101906.7
(22) Date of filing: 31.01.1990
(51) Int. Cl.: B60R 11/02

(54) **Attachment system for the holder of the operating device of a radiophone**
Befestigungssystem für die Halterung der Sprechvorrichtung eines Funktelefons
Système de fixation du support du dispositif d'utilisation d'un radiotéléphone

(30) Priority: 03.02.1989 FI 890539
(43) Date of publication of application: 29.08.1990
(73) Proprietor: NOKIA MOBILE PHONES LTD., 24100 Salo (FI)
(72) Inventor: Koskinen, Pentti Antero, SF-24800 Halikko (FI); Timari, Antti Sakari, SF-33880 Sääksjärvi (FI)
(74) Representative: Liska, Horst, Dr.-Ing.

(56) References cited:
- US-A- 4 797 916
- IBM TECHNICAL DISCLOSURE BULLETIN. vol. 31, no. 5, October 1988, NEW YORK USpages 384 - 386; "INEXPENSIVE UNIVERSAL TILT/SWIVEL DEVICE"

## Description

The present invention relates to an attachment system for the holder of an operating device of a radiophone according to the preamble to claim 1.

The user interface of a radiophone is formed of an operating device and its holder. The operating device is kept in its holder when it is not in use, that is, when a telephone conversation takes place without lifting the receiver.

The holder of the operating device can be attached to the control board or to another suitable place. This attachment has previously been done rigidly so that the operating device has always been in the same position in its holder. Especially with the car radiophone, this may result in ergonomically unpleasant positions to the user when grabbing the operating device. The use of the keyboard of the operating device may also be difficult if the user does not see the keyboard clearly. Also to guarantee the general safety for the traffic it is important that the operating device is easily accessible and usable.

Document US-A-4 797 916 discloses an attachment system for the holder of a telephone handset which, although not completely adjustable, can be pivoted at least about two axes.

The object of the present invention is to overcome the above-mentioned difficulties. The invention deals with an attachment system for the holder of the operating system, with which the holder can be turned in various directions step by step, in which case the operating device can be placed ergonomically to the most satisfactory and easy-to-use position for the user. In accordance with the present invention this has been achieved by an attachment system according to claim 1. A joint between the holder and the radio device makes it possible to turn the holder step by step in two directions and also to rotate it around its vertical axis.

The attachment system for the holder according to the invention includes a joint consisting of three parts, which parts have grooved faces that are placed against each other, whereby the holder can be locked to the desired position by adjusting the parts in relation to each other while the grooved faces settle against each other. The holder is fastened to this desired position by using the attachment piece going through the the holder and the joint and by its counter pieces. A curved grooved face, that is compatible with the first curved grooved piece of the joint, is formed to the rear piece of the holder.

According to one embodiment of the invention, in order to change the desired position, a spring is installed on the other side of that counter piece that is located on the same side as the attachment holder around the end of the attachment piece and attached to the end of the piece, whereby, when lifting the holder upwards, the spring sinks and the connection of the pieces of the spring becomes looser, and they can be turned into a new position in relation to each other, and locked to their positions by using the spring pressing the grooves and the pieces against each other when the holder is put back to the down position.

According to another embodiment of the invention the joint is fastened solidly in its place using a screw that penetrates the joint and the rear piece of the holder, and the holder is tightened to the desired position with a nut. If you want to change the position the bolt has to be opened.

The characteristics of the invention are presented in the enclosed claims.

The invention is illustrated in more detail in the following figures, where
Figure 1 is an exploded view of the attachment system for the holder, where the joint is fastened using a pin part and a spring, and
Figure 2 is an exploded view of the attachment system of the holder, where the joint is fastened using a screw and a nut.

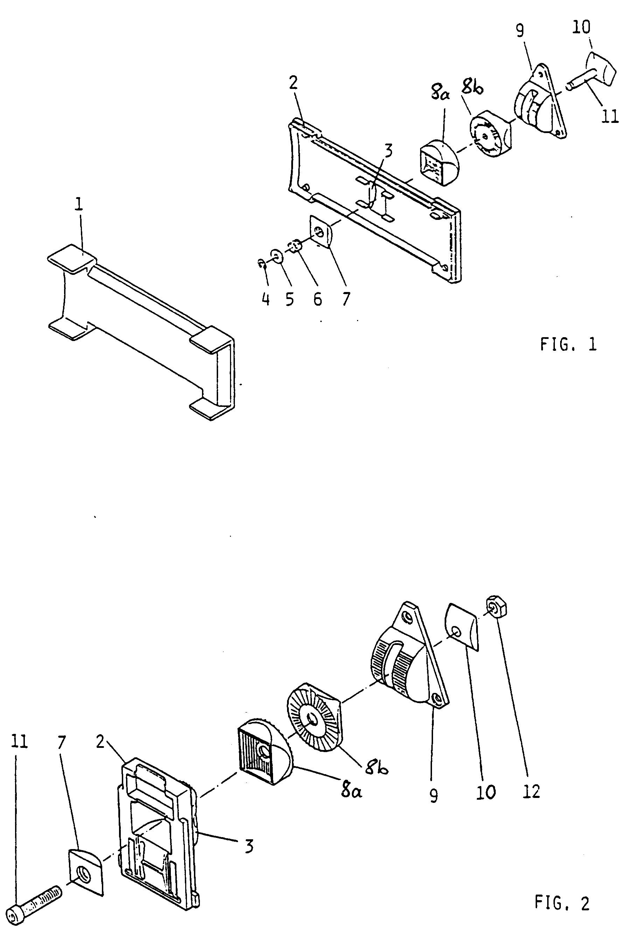

In figure 1 the holder consisting of a front piece 1 and a rear piece 2 is presented. In the middle of the rear piece 2 an outward convex face 3 that is grooved outside is formed, comprising a longitudinal opening that is perpendicular to the grooves (not shown in the figure). The attachment piece, which in this embodiment is a pin 11 , is able to turn in this opening when the position of the joint is altered. That side of the smooth counter piece 7 pressing against the rear piece 2 is formed convex, which enables it to be pressed against the correspondingly concave inside face formed to the rear piece 2, and it is able to slide along this face when moving the spring 6.

The face of the first piece 8a of the joint placed against the convex face 3 formed in the rear piece 2 of holder, is grooved and formed concave so, that its grooves press into the corresponding grooves of the face 3 of the holder. The other side of the first piece 8a is planar and is grooved radially. The second piece 8b of the joint is equal to the first piece 8a, but it is installed the other way around so that the planar, radially grooved faces of the first 8a and the second piece 8b are placed against each other and the grooves press against each other, whereby it is possible to rotate them in relation to each other. The face of the third piece 9 of the joint that is placed against the second piece, is grooved and formed convex, whereby it is pressed against the concave, grooved face of the second piece. An opening perpendicular to the grooves is formed through the third piece 9, in order to make it possible to move the piece 9 linearly in relation to the attachment piece 11 . A convex recess is formed to the other side of the third piece 9 , to which the counter piece 10 fits, and along which it is able to slide when the joint is moved. The joint 8a, 8b, 9 is attached to the control board or to another suitable place using the holes of the brackets of the third piece 9 .

This arrangement makes it possible to adjust the position of the holder step by step to any desired position by adjusting with the assistance of the grooves the third piece 9 in relation to the second piece 8b of the joint linearly and/or by rotating the second piece 8b in relation to the first one 8a around the attachment piece 11 that goes through the joint and/or by adjusting the first piece 8a of the joint linearly in relation to the convex face 3 formed to the rear piece 2 of the holder.

The pin 11 that is mounted to the counter piece 10 goes hence through the opening of the third piece 9 , the holes of the first 8a and the second piece 8b, the opening of the convex face 3 of the holder and the counter piece 7 placed behind the opening. A spring 6 is placed around the end of the pin 11 that sticks out from the other side of the counter piece 7. The spring 6 is pressed between the counter piece 7 and the flat ground piece 5 using a circlip spring 4 that is attached outermost around the end of the pin 11. This attachment system makes it possible to lock the holder to the desired position by lifting the holder, whereby the spring 6 is pressed down and the pieces of the joint become looser so that it is possible to move them into various positions in relation to each other. When the holder is put down again the spring 6 returns to the its original position and presses the pieces of the joint against each other.

According to the embodiment of the invention presented in the figure 2, a screw 11 that goes through the counter piece 7 , the holder 3 , the joint 8, 9 and another similar counter piece 10 , is used as an attachment piece. The screw 11 is tightened using a nut 12 so that the holder is attached to the desired position while the grooves of the joint press against each other. When you want to alter the position of the holder, the nut 12 has to be loosened in order to move the pieces of the joint in relation to each other.

## Claims

1. Attachment system for a holder (2, 3) of an operating device of a car radiophone, the system being in the form of a joint allowing the holder to be turned step by step in various directions,
the joint comprising:
- a first piece (8a) to be placed against the holder (2, 3), the first piece (8a) having a planar but radially grooved face opposite the holder (2, 3),
- a second piece (8b) having a planar but radially grooved face placed against the planar face of the first piece (8a) and having another grooved face,
- a third piece (9) having a grooved face compatible with said other grooved face of the second piece (8b) and
- attachment means having a locking device (4, 5, 6; 12) and uniting the pieces (8a, 8b, 9) of the joint and the holder (2, 3),
**characterized in that**
the first piece (8a) has a grooved concave face being installed against a correspondingly grooved convex face of the holder (2, 3),
in that the second piece (8b) is similar to the first piece (8a) but is installed the other way round to place the planar faces of the first and second pieces (8a, 8b) against each other,
in that the grooved face of the third piece (9) is convex and said other grooved face of the second piece (8b) is concave,
in that the holder (2, 3) and the third piece (9) each have an opening perpendicular to the grooves of their respective convex faces and each have a smooth concave face opposite their respective grooved convex faces,
in that the joint comprises two counterpieces (7, 10) each having a smooth convex face slidable along the smooth concave face of the holder (2, 3) and the third piece (9), respectively,
and in that the attachment means comprise an attachment piece (11) going through the joint and the holder (2, 3) so as to unite the counterpieces (7, 10), whereby, when turning said three pieces (8a, 8b, 9) of the joint in relation to each other, the attachment piece (11) moves along the openings in the holder (2, 3) and the third piece (9), respectively.

2. Attachment system in accordance with claim 1,
characterized in that the attachment piece (11) is a pin mounted to one (10) of the two counterpieces with one end, and its other end goes through the other (7) of the two counterpieces, and the locking device is formed of a spring (6) being placed around the end of the pin (11) and being compressed between the other counterpiece (7) and a flat ground piece (5) by using a circlip spring (4).

3. Attachment system in accordance with claim 1,
characterized in that the attachment piece (11) is a screw and the locking device is a nut (12).

## Patentansprüche

1. Befestigungssystem für eine Halterung (2, 3) einer Betätigungsvorrichtung eines Autofunktelefons, wobei das System als Gelenk ausgebildet ist, durch welches die Halterung schrittweise in unterschiedlichen Richtungen drehbar ist,
wobei das Gelenk umfaßt:
ein erstes Gelenkteil (8a), welches an der Halterung (2, 3) anliegend anzuordnen ist, wobei das erste Gelenkteil (8a) der Halterung (2, 3) gegenüber eine ebene, aber radial mit Rillen versehene Fläche aufweist,
ein zweites Gelenkteil (8b) mit einer an der ebenen Fläche des ersten Gelenkteils (8a) anliegend angeordneten ebenen, aber radial mit Rillen versehenen Fläche und mit einer weiteren mit Rillen versehenen Fläche,
ein drittes Gelenkteil (9) mit einer mit Rillen versehenen Fläche, welche mit der weiteren mit Rillen versehenen Fläche des zweiten Gelenkteils (8b) kompatibel ist, und
Befestigungsmittel mit einer Feststellvorrichtung (4, 5, 6; 12), welche die Gelenkteile (8a, 8b, 9) und die Halterung (2, 3) zusammenhalten,
dadurch gekennzeichnet,
daß das erste Gelenkteil (8a) eine mit Rillen versehene konkave Fläche aufweist, welche an einer entsprechend mit Rillen versehenen konvexe Fläche der Halterung (2, 3) anliegend angeordnet ist,
daß das zweite Gelenkteil (8b) dem ersten Gelenkteil (8a) ähnelt, jedoch andersherum eingebaut ist, um die ebenen Flächen des ersten und des zweiten Gelenkteils (8a, 8b) aneinander anliegend anzuordnen,
daß die mit Rillen versehene Fläche des dritten Gelenkteils (9) konvex ist und die weitere mit Rillen versehene Fläche des zweiten Gelenkteils (8b) konkav ist,
daß die Halterung (2, 3) und das dritte Gelenkteil (9) jeweils eine zu den Rillen ihrer entsprechenden konvexen Flächen orthogonale Öffnung aufweisen und jeweils entgegengesetzt zu ihren entsprechenden mit Rillen versehenen konvexen Flächen eine glatte konkave Fläche aufweisen,
daß das Gelenk zwei Gegenstücke (7, 10) umfaßt, welche jeweils eine entlang der glatten konkaven Fläche der Halterung (2, 3) bzw. des dritten Gelenkteils (9) verschiebbare glatte konvexe Fläche aufweisen,
und daß die Befestigungsmittel ein Befestigungsteil (11) umfassen, welches durch das Gelenk und die Halterung (2, 3) derart hindurchgeht, daß die Gegenstücke (7, 10) zusammengehalten werden, wodurch bei Drehen der drei Gelenkteile (8a, 8b, 9) relativ zueinander sich das Befestigungsteil (11) entlang der Öffnungen in der Halterung (2, 3) bzw. dem dritten Gelenkteil (9) bewegt.

2. Befestigungssystem nach Anspruch 1, dadurch gekennzeichnet, daß das Befestigungsteil (11) ein mit einem Ende an einem (10) der beiden Gegenstücke angebrachter Stift ist, dessen anderes Ende durch das andere (7) der beiden Gegenstücke hindurchgeht, wobei die Feststellvorrichtung als eine um das Ende des Stifts (11) herum angeordnete Feder (6) ausgebildet ist, welche durch Verwendung einer Sicherungsfeder (4) zwischen dem anderen Gegenstück (7) und einem flachen Basisteil (5) komprimiert ist.

3. Befestigungssystem nach Anspruch 1, dadurch gekennzeichnet, daß das Befestigungsteil (11) eine Schraube und die Feststellvorrichtung eine Mutter (12) ist.

## Revendications

1. Système de fixation destiné à un support (2, 3) d'un dispositif d'utilisation d'un radio-téléphone de voiture, le système étant sous la forme d'un raccord permettant au support d'être tourné étape par étape dans diverses directions,
le raccord comprenant :
- une première pièce (8a) qui doit être placée contre le support (2, 3), la première pièce (8a) ayant une face plane mais radialement rainurée opposée au support (2, 3),
- une seconde pièce (8b) ayant une face plane mais radialement rainurée placée contre la face plane de la première pièce (8a) et ayant une autre face rainurée,
- une troisième pièce (9) ayant une face rainurée compatible avec ladite autre face rainurée de la seconde pièce (8b), et
- un moyen de fixation comportant un dispositif de blocage (4, 5, 6 ; 12) et unissant les pièces (8a, 8b, 9a) du raccord et du support (2, 3),
caractérisé en ce que
la première pièce (8a) comporte une face rainurée concave qui est installée contre une face rainurée convexe correspondante du support (2, 3),
en ce que la seconde pièce (8b) et similaire à la première pièce (8a) mais est installée d'une autre manière pour placer les faces planes des première et seconde pièces (8a, 8b) l'une contre l'autre,
en ce que la face rainurée de la troisième pièce (9) est convexe et en ce que ladite autre face rainurée de la seconde pièce (8b) est concave,
en ce que le support (2, 3) et la troisième pièce (9) ont chacun une ouverture perpendiculaire aux rainures de leurs faces convexes respectives et chacun ont une face concave lisse opposée à leurs faces convexes rainurées respectives,
en ce que le raccord comprend deux contre-pièces (7, 10) chacune ayant une face convexe lisse coulissable suivant la face concave lisse du support (2, 3) et de la troisième pièce (9), respectivement,
et en ce que le moyen de fixation comprend une pièce de fixation (11) passant à travers le raccord et le support (2, 3) de façon à unir les contre-pièces (7, 10), d'où il résulte que lorsqu'on tourne lesdites trois pièces (8a, 8b, 9) du raccord les unes par rapport aux autres, la pièces de fixation (11) se déplace suivant les ouvertures dans le support (2, 3) et la troisième pièce (9), respectivement.

2. Système de fixation selon la revendication 1, caractérisé en ce que la pièce de fixation (11) est une broche montée sur une contre-pièce (10) des deux contre-pièces à une première extrémité et son autre extrémité passe à travers l'autre (7) des deux contre-pièces et le dispositif de blocage est formé d'un ressort (6) qui est placé autour de l'extrémité de la broche (11) et qui est comprimé entre l'autre contre-pièce (7) et une pièce polie plate (5) par l'utilisation d'un circlips (4).

3. Système de fixation selon la revendication 1, caractérisé en ce que la pièce de fixation (11) est une vis et en ce que le dispositif de blocage est un écrou (12).
